Europäisches Patentamt

(19) European Patent Office

Office européen des brevets

(11) Numéro de publication : **0 083 385**
**B1**

(12) **FASCICULE DE BREVET EUROPÉEN**

(45) Date de publication du fascicule du brevet :
30.10.85

(21) Numéro de dépôt : 81402099.6

(22) Date de dépôt : 31.12.81

(51) Int. Cl.⁴ : **A 23 L  3/00, A 23 L  3/04**

(54) **Procédé de manutention de produits alimentaires sous poche plastique, dispositif et installation de manutention de ces produits en liaison avec une installation de stérilisation.**

(43) Date de publication de la demande :
13.07.83 Bulletin 83/28

(45) Mention de la délivrance du brevet :
30.10.85 Bulletin 85/44

(84) Etats contractants désignés :
AT BE CH DE FR GB IT LI LU NL SE

(56) Documents cités :
FR-A- 1 028 542
FR-A- 1 416 784
FR-A- 1 591 576
GB-A- 1 509 046
GB-A- 2 054 508
US-A- 3 536 225
JOURNAL OF FOOD SCIENCE, vol. 47, no. 1, janvier 1981, pages 303-305, Chicago, Illinois (USA); R.A. ROOP et al.: "Processing retort pouches in conventional sterilizers".

(73) Titulaire : **Gomez, Robert**
**27 rue de la Liberté**
**F-93700 Drancy (FR)**

(72) Inventeur : **Gomez, Robert**
**27 rue de la Liberté**
**F-93700 Drancy (FR)**

(74) Mandataire : **Laget, Jean-Loup et al**
**Cabinet Pierre Loyer 18, Rue de Mogador**
**F-75009 Paris (FR)**

Jouve, 18, rue St-Denis, 75001 Paris, France

## Description

L'invention concerne un procédé de manutention de produits alimentaires sous poche plastique, et une installation de manutention de ces produits en liaison avec une installation de stérilisation.

Il est connu de stériliser des produits alimentaires dans des installations du type à pression hydrostatique, c'est-à-dire à vapeur d'eau saturante. Une installation de ce type est décrite notamment dans le brevet français n° 1.454.040.

En règle générale, les produits alimentaires sont disposés dans des boîtes métalliques cylindriques qui sont logées dans des paniers tubulaires entraînés par des jeux de chaînes dans une enceinte de stérilisation. Au cours de leurs déplacements dans cette enceinte, les paniers restent horizontaux même s'ils roulent sur eux-mêmes.

Il est connu par le document FR-A-1.416.784 de stériliser des produits alimentaires placés dans des récipients en matière plastique eux-mêmes disposés dans des conteneurs dont une extrémité est ouverte, mais il s'agit de récipients rigides.

Jusqu'à présent, on n'a pas réussi à stériliser, dans ce genre d'installation, des produits alimentaires sous poche plastique. En effet, les poches plastiques sont relativement fragiles et leur mise en place dans les paniers tubulaires n'est pas facile à assurer avec des moyens de manutention mécaniques.

En outre, après stérilisation, les poches plastiques manquent de tenue et leur extraction est délicate.

C'est essentiellement au moment de leur introduction dans les paniers, ou de leur extraction de ces paniers, que les poches plastiques sont détériorées en raison de leur manque de tenue et de' rigidité.

Un but de l'invention est de procurer un dispositif simple de manutention des poches plastiques dans une installation de stérilisation de produits alimentaires, qui évite leur détérioration lors des phases critiques d'introduction dans les paniers et d'extraction de ces paniers tubulaires. Un autre but de l'invention est de procurer une installation de manutention de ces produits sous poche plastique en liaison avec une installation de stérilisation de produits alimentaires, de façon à assurer par des moyens mécaniques simples l'entrée et la sortie des poches plastiques respectivement dans et hors des paniers tubulaires de l'installation de stérilisation.

La présente invention a pour objet un procédé de manutention de produits alimentaires sous poche plastique, en vue de leur stérilisation dans une installation de stérilisation dans laquelle des paniers tubulaires sont déplacés horizontalement, les poches plastiques étant disposées dans des conteneurs cylindriques ouverts à une extrémité et qui sont seuls soumis aux contraintes mécaniques, caractérisé en ce que les conteneurs sont présentés par paire, avec leurs ouvertures en vis-à-vis, et sont déplacés ensemble longitudinalement pour être chargés dans les paniers et déchargés des paniers.

L'invention a également pour objet une installation de manutention de produits alimentaires sous poche plastique dans des conteneurs cylindriques fermés à l'une de leurs extrémités et ouverts à l'autre, dont au moins la surface latérale est munie de perforations pour la mise en œuvre du procédé précédant, caractérisée en ce qu'elle comporte une chaîne sans fin située dans un plan vertical ; deux séries de porte-conteneurs disposés symétriquement par rapport au plan de la chaîne, entraînés par la chaîne, et constitués par des tubes cylindriques ouverts aux deux extrémités et présentant une ouverture longitudinale en forme de bande ; et des conteneurs disposés dans les porte-conteneurs et susceptibles de recevoir les produits alimentaires sous poche plastique pour assurer leur manutention, les porte-conteneurs étant doués d'une certaine élasticité leur permettant de recevoir, en se déformant légèrement, les conteneurs, et de les maintenir pendant leur déplacement.

Selon d'autres caractéristiques préférées de l'invention :

— l'installation comporte un poste de remplissage des conteneurs, un poste de chargement dans les paniers tubulaires de l'installation de stérilisation, un poste de déchargement des paniers tubulaires, et un poste de vidange des conteneurs,

— elle comporte entre le poste de remplissage des conteneurs et le poste de chargement, une rampe inclinée basculant les conteneurs en position horizontale et les plaçant deux à deux avec leurs ouvertures en regard ; et entre le poste de déchargement des paniers tubulaires et le poste de vidange des conteneurs, une autre rampe inclinée qui remet les conteneurs en position verticale ;

— au poste de chargement dans les paniers tubulaires de l'installation de stérilisation, un organe de poussée est prévu pour assurer le transfert dans le panier de deux conteneurs en vis-à-vis ;

— au poste de déchargement des paniers tubulaires, un autre organe de poussée est prévu pour remplacer deux conteneurs dans leurs porte-conteneurs respectifs.

D'autres caractéristiques ressortiront de la description qui suit faite avec référence au dessin annexé sur lequel on peut voir :

Figure 1 une vue schématique en élévation d'une installation de manutention de produits alimentaires sous poche plastique, selon l'invention, en liaison avec une installation de stérilisation non représentée ;

Figure 2 une vue schématique en coupe selon un plan horizontal médian de l'installation de manutention de la figure 1 ;

Figure 3 une vue en perspective d'un conteneur de manutention de produits alimentaires sous poche plastique utilisable dans l'installation selon les figures 1 et 2.

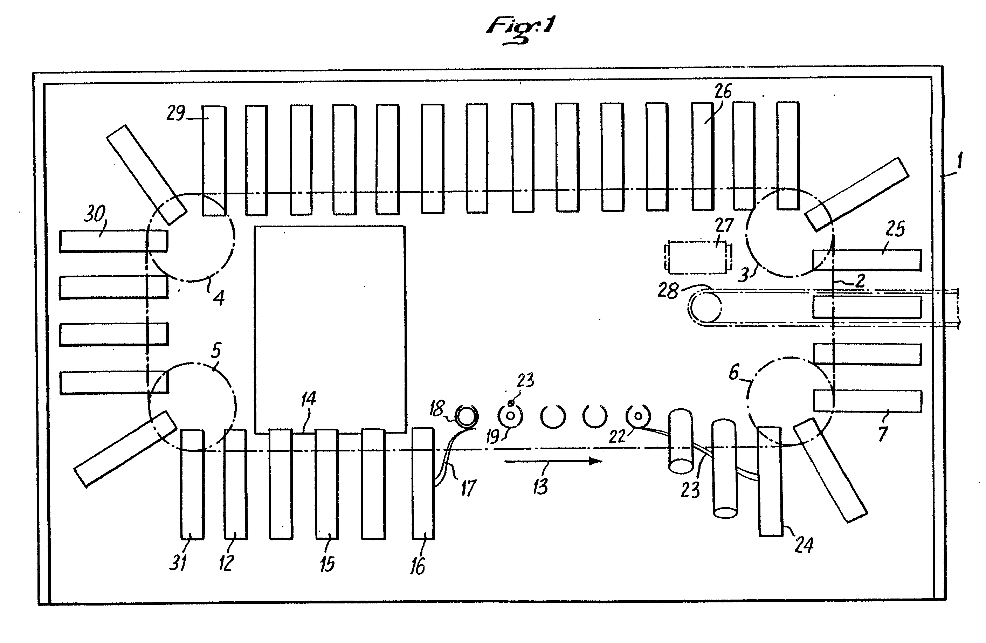

En se reportant à la figure 1, on peut voir que l'installation de manutention selon l'invention comporte essentiellement un bâti 1 rigide, et à l'intérieur de l'espace défini par ce bâti, une chaîne sans fin 2 disposée dans un plan vertical médian, entraînée mécaniquement par des moyens classiques non représentés, et tendue entre quatre roues 3 à 6 dont l'une au moins est motrice. Sur cette chaîne sans fin 2, et de part et d'autre du plan vertical de la chaîne, sont disposés deux jeux symétriques de porte-conteneurs 7 et 7' respectivement.

Une caractéristique de l'invention est que ces porte-conteneurs sont symétriques deux à deux par rapport au plan de la chaîne quels que soient les mouvements et les déplacements qui leur sont imposés par la chaîne. Un porte-conteneur est constitué par un tube 8 cylindrique ouvert à ses extrémités et présentant une ouverture longitudinale en forme de bande 9. La surface latérale cylindrique du porte-conteneur est ainsi douée d'une certaine élasticité qui lui permet de recevoir en se déformant légèrement un conteneur 10 et de le maintenir tout au long de son déplacement.

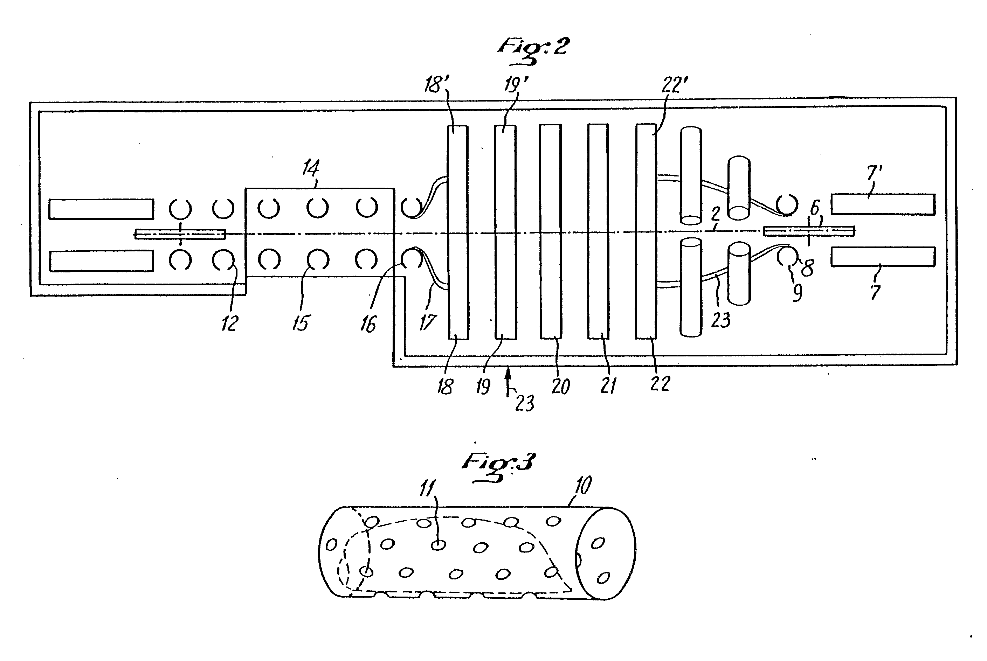

Un conteneur 10 (Figure 3) est constitué d'un tube fermé à l'une de ses extrémités, et présentant au moins sur sa surface latérale des perforations 11 de façon à faciliter le passage de la vaneur d'eau de stérilisation dans une installation de stérilisation à pression hydrostatique par exemple.

Sur les figures 1 et 2 ne sont représentés que les porte-conteneurs entraînés par la chaîne 2. En réalité, les conteneurs tels que 10 sont mis en place dans les porte-conteneurs qui les maintiennent par déformation élastique. Le volume des conteneurs est sensiblement égal à celui des porte-conteneurs.

Dans la représentation des figures 1 et 2, l'extrémité fermée des conteneurs est placée vers l'extérieur par rapport à la chaîne, l'extrémité ouverte au voisinage de la chaîne. On peut maintenant étudier le fonctionnement de l'installation en suivant un conteneur tout au long d'un cycle, en partant par exemple de la position 12 à la sortie de la roue 5. Dans cette position 12, le conteneur est vertical, son fond est vers le bas et son ouverture vers le haut (figure 1). La chaîne 2 se déplaçant dans le sens de la flèche 13 (Figure 1), le conteneur arrive au poste de remplissage 14. Lorsqu'il est en position 15 par exemple, il reçoit une poche plastique contenant des produits alimentaires à stériliser. Cette poche est placée dans le conteneur soit manuellement soit automatiquement. Elle est maintenue dans le conteneur qui est lui-même tenu par le porte-conteneur.

A la sortie du poste de remplissage 14, en position 16 (figure 2), le porte-conteneur est relevé en position horizontale 18 au moyen d'une rampe 17 par exemple. Les porte-conteneurs étant symétriques par rapport au plan de la chaîne 2, deux porte-conteneurs 18 et 18' se trouvent alors en vis-à-vis avec leurs axes horizontaux et confondus. C'est une caractéristique de l'invention que les deux conteneurs placés dans les positions 18 et 18' soient pratiquement jointifs par leur extrémité ouverte.

De la position 18 à la position 22, les porte-conteneurs sont horizontaux. Cette plage du parcours correspond aux postes de chargement dans le stérilisateur et de déchargement du stérilisateur. Lorsque les porte-conteneurs arrivent en position 19, les conteneurs sont transférés dans le stérilisateur ou installation de stérilisation du type décrit dans le brevet français 1.454.040 par exemple. Ce transfert s'effectue au moyen d'un organe symbolisé par la flèche 23, qui vient s'appliquer au fond du conteneur en position 19, au droit de l'ouverture en bande 9 du porte-conteneur, et qui pousse le conteneur en le faisant glisser dans le porte-conteneur. Le conteneur 19 entraîne à son tour le conteneur qui lui fait face en position 19' et l'entraîne vers le panier tubulaire de l'installation de stérilisation non représentée.

Lorsque les deux conteneurs, l'un poussant l'autre, sont en place dans le panier tubulaire du stérilisateur, l'organe 23 revient à sa position initiale de repos. Cet organe est avantageusement entraîné par un vérin télescopique.

En positions 20 et 21, les porte-conteneurs restent vides. La position 22 correspond au poste de déchargement du stérilisateur. Un autre organe non représenté mais du même type que l'organe 23 repousse deux conteneurs hors du panier tubulaire dans lequel ils se trouvent et les insère dans le porte-conteneur 22' jusqu'à les placer symétriquement par rapport au plan de la chaîne 2. Ces deux conteneurs viennent de terminer un cycle de stérilisation dans l'installation de stérilisation et sont donc garnis d'une poche plastique contenant des produits alimentaires stérilisés. Une rampe 23 assure le retour des porte-conteneurs à leur situation verticale initiale, dans la position 24.

La chaîne 2 s'enroule alors sur la roue 6 (figure 1) et les conteneurs se trouvent horizontaux mais toujours parallèles au plan vertical médian de la chaîne. Ils montent jusqu'à la position 25 et amorcent un quart de tour autour de la roue 3. Ils arrivent alors en position 26 au poste de vidange : la poche plastique qui se trouvait dans le conteneur tombe sur un transporteur à bande 27 par exemple, qui transporte les poches hors de l'encombrement du bâti 1 par exemple et les dépose sur un autre transporteur à bande 28 qui les entraîne à la station de conditionnement.

Les conteneurs continuent alors leur parcours par les positions 29, 30, 31, jusqu'à la position initiale 12 à proximité du poste de remplissage 14.

On peut remarquer que les conteneurs se déplacent toujours parallèlement au plan vertical médian de l'installation qui est le plan de la chaîne 2, à l'exception d'un court passage entre les deux rampes 17 et 23, correspondant aux postes de chargement dans le stérilisateur et de déchargement du stérilisateur, c'est-à-dire aux postes correspondant au transfert des conteneurs eux-mêmes.

Ces conteneurs préservent les poches plastiques de toute contrainte mécanique à l'intérieur de l'installation de stérilisation et au cours des opérations de chargement et de déchargement. Ainsi, les produits alimentaires contenus dans les poches plastiques sont préservés des contraintes mécaniques et les poches plastiques ne sont pratiquement plus sujettes à rupture au cours du traitement de stérilisation, et surtout dans les phases de transfert mécanique.

L'entraînement de la chaîne est avantageusement assuré au moyen d'un moteur respectant à chaque pas un arrêt correspondant au temps de chargement des conteneurs dans le panier du stérilisateur, et simultanément, au temps de déchargement des conteneurs et à leur ré-insertion dans les porte-conteneurs. Cette installation de manutention est quasiment automatique et sa rusticité est garante de son bon fonctionnement : il n'y a en effet pratiquement pas de point fragile.

L'invention a été décrite dans un exemple particulier de réalisation. De la même manière, on a décrit une installation de manutention de produits alimentaires sous poche plastique, mais l'invention s'applique à tous produits présentés sous enveloppe non rigide, voire fragile.

**Revendications**

1. Procédé de manutention de produits alimentaires sous poche plastique, en vue de leur stérilisation dans une installation de stérilisation dans laquelle des paniers tubulaires sont déplacés horizontalement, les poches plastiques étant disposées dans des conteneurs cylindriques ouverts à une extrémité et qui sont seuls soumis aux contraintes mécaniques, caractérisé en ce que les conteneurs sont présentés par paire, avec leurs ouvertures en vis-à-vis, et sont déplacés ensemble longitudinalement pour être chargés dans les paniers et déchargés des paniers.

2. Installation de manutention de produits alimentaires sous poche plastique dans des conteneurs cylindriques fermés à l'une de leurs extrémités et ouverts à l'autre, dont au moins la surface latérale est munie de perforations pour la mise en œuvre du procédé selon la revendication 1, caractérisée en ce qu'elle comporte une chaîne sans fin (2) située dans un plan vertical ; deux séries de porte-conteneurs (7, 7'), disposés symétriquement par rapport au plan de la chaîne, entraînés par la chaîne (2), et constitués par des tubes cylindriques (8) ouverts aux deux extrémités et présentant une ouverture longitudinale (9) en forme de bande ; et des conteneurs (10) disposés dans les porte-conteneurs et susceptibles de recevoir les produits alimentaires sous poche plastique pour assurer leur manutention, les porte-conteneurs étant doués d'une certaine élasticité leur permettant de recevoir, en se déformant légèrement, les conteneurs, et de les maintenir pendant leur déplacement.

3. Installation selon la revendication 2, caractérisée en ce qu'elle comporte : un poste de remplissage (14) des conteneurs, un poste de chargement dans les paniers tubulaires de l'installation de stérilisation, un poste de déchargement des paniers tubulaires, et un poste de vidange des conteneurs.

4. Installation selon la revendication 3, caractérisée en ce qu'elle comporte entre le poste de remplissage des conteneurs et le poste de chargement, une rampe inclinée (17) basculant les conteneurs en position horizontale et les plaçant deux à deux avec leurs ouvertures en regard ; et entre le poste de déchargement des paniers tubulaires et le poste de vidange des conteneurs, une autre rampe inclinée (23) qui remet les conteneurs en position verticale.

5. Installation selon la revendication 4, caractérisé en ce que, au poste de chargement dans les paniers tubulaires de l'installation de stérilisation, un organe de poussée (23) est prévu pour assurer le transfert dans le panier de deux conteneurs en vis-à-vis.

6. Installation selon la revendication 4, caractérisée en ce que, au poste de déchargement des paniers tubulaires, un autre organe de poussée est prévu pour remplacer deux conteneurs dans leurs porte-conteneurs respectifs.

**Claims**

1. Method for the handling of food products in plastic bags, for the purpose of sterilising them in a sterlisation installation wherein tubular baskets are moved horizontally, the plastic bags being arranged in cylindrical containers which are open at one end and which alone are subjected to mechanical stresses, characterised in that the containers are presented in pairs, with their openings opposite each other, and are moved together longitudinally to be fed into the baskets and discharged from the baskets.

2. Installation for the handling of food products in plastic bags in cylindrical containers which are closed at one of their ends and open at the other, whereof at least the lateral surface is provided with perforations, for carrying out the method according to claim 1, characterised in that it comprises an endless chain (2) situated in a vertical plane ; two series of container carriers (7, 7') arranged symmetrically with respect to the plane of the chain, driven by the chain (2) and constituted by cylindrical tubes (8) open at both ends and having a long narrow longitudinal opening (9) ; and containers (10) which are arranged in the container carriers and are adapted to receive the food products in plastic bags for the handling of these products, the container carriers being given a certain amount of elasticity allowing them to be slightly deformed when receiving the containers and to hold them during their movement.

3. Installation according to claim 2, characterised in that it comprises : a station (14) for the filling of the containers, a station for feeding into the tubular baskets of the sterilisation installation, a station for discharging from the tubular baskets, and a station for the emptying of the containers.

4. Installation according to claim 3, characterised in that it comprises between container-filling station and feeding station an inclined ramp (17) which rocks the containers into a horizontal position and places them in twos with their openings facing ; and between the station for discharging from the tubular baskets and the container-emptying station another inclined ramp (23) which puts the containers back into a vertical position.

5. Installation according to claim 4, characterised in that at the station for feeding into the tubular baskets of the sterilisation installation a push member (23) is provided for transferring two opposite containers into the basket.

6. Installation according to claim 4, characterised in that at the station for discharging from the tubular baskets another push member is provided for replacing two containers into their respective container carriers.

**Patentansprüche**

1. Verfahren zur Handhabung von Lebensmitteln in plastischen Beuteln zu deren Sterilisierung in einer Sterilisiervorrichtung, in der rohrförmige Arbeitskörbe waagrecht versetzt werden, wobei die plastischen Beutel in zylindrischen, auf einer Seite offenen Behältern angeordnet sind, wobei nur diese mechanischen Beanspruchungen ausgesetzt sind, dadurch gekennzeichnet, daß die Behälter paarweise in eine solche Stellung gebracht werden, daß ihre Öffnungen einander gegenüberliegen und daß sie gemeinsam der Länge nach versetzt werden, um ein Beschicken der Arbeitskörbe und eine Entnahme aus den Arbeitskörben zu ermöglichen.

2. Einrichtung zur Handhabung von Lebensmitteln in plastischen Beuteln in zylindrischen, an einem ihrer Enden geschlossenen und an ihrem anderen Ende offenen Behältern, bei denen mindestens die Seitenfläche mit Lochungen versehen ist, zur Durchführung des Verfahrens nach Anspruch 1, dadurch gekennzeichnet, daß sie eine in einer senkrechten Ebene liegende Endloskette (2), zwei Gruppen von zur Ebene der Kette symmetrisch angeordneten und von der Kette (2) angetriebenen Behälterträgern (7, 7'), welche durch zylindrische, an beiden Enden offene und eine streifenförmige längliche Öffnung (9) aufweisende Rohre (8) gebildet werden, und Behälter (10) umfaßt, welche in den Behälterträgern angeordnet sind und für die Aufnahme von Lebensmitteln in plastischen Beuteln geeignet sind, um deren Handhabung zu gewährleisten, wobei die Behälterträger eine gewisse Elastizität aufweisen, die es ihnen ermöglicht, die Behälter aufzunehmen, indem sich die Behälterträger leicht verformen und die Behälter während ihrer Versetzung halten.

3. Einrichtung nach Anspruch 2, dadurch gekennzeichnet, daß sie eine Füllstation (14) für die Behälter, eine Beschickungsstation der rohrförmigen Arbeitskörbe in der Sterilisiervorrichtung, eine Entnahmestation aus den rohrförmigen Arbeitskörben und eine Entleerstation der Behälter umfaßt.

4. Einrichtung nach Anspruch 3, dadurch gekennzeichnet, daß sie zwischen der Füllstation der Behälter und der Beschickungsstation eine geneigte Rampe (17) aufweist, welche die Behälter in eine waagrechte Lage schwenkt und jeweils zwei von ihnen in eine solche Lage bringt, daß ihre Öffnungen einander gegenüberliegen, und daß zwischen der Entnahmestation aus den rohrförmigen Arbeitskörben und der Entleerstation der Behälter eine weitere geneigte Rampe (23) angeordnet ist, die die Behälter wieder in eine senkrechte Lage bringt.

5. Einrichtung nach Anspruch 4, dadurch gekennzeichnet, daß bei der Beschickungsstation der rohrförmigen Arbeitskörbe der Sterilisiervorrichtung ein Schuborgan (22) vorgesehen ist, das die Verlagerung der beiden gegenüberliegenden Behälter in die Arbeitskörbe gewährleistet.

6. Einrichtung nach Anspruch 4, dadurch gekennzeichnet, daß bei der Entleerstation der rohrförmigen Arbeitskörbe ein weiteres Schuborgan für den Ersatz zweier Behälter in ihren jeweiligen Behälterträgern vorgesehen ist.

Fig.1

Fig. 2

Fig. 3

0 083 385